# EUROPÄISCHE PATENTANMELDUNG

(11) **EP 1 385 302 A1**
(43) Veröffentlichungstag der Anmeldung: **28.01.2004**
(21) Anmeldenummer: 03015780.4
(22) Anmeldetag: 10.07.2003
(51) Int. Cl.: H04L 12/40, H04L 29/08, H04Q 11/04

(54) **Kommunikationsnetzwerk**

(30) Priorität: 23.07.2002 DE 10233436
(71) Anmelder: SIEMENS AKTIENGESELLSCHAFT, 80333 München (DE)
(72) Erfinder: Zahner, Ulrich, Dr., 91052 Erlangen (DE)

(57) **Zusammenfassung**

Die Erfindung betrifft ein Kommunikationsnetzwerk mit mehreren Subsystemen. Es ist vorgesehen, dass jedes Subsystem mit einem Adapter verbunden ist, der mit einem Bussystem in Verbindung steht und Daten des Subsystems an ein standardisiertes Datenschema anpasst. Dadurch ist eine Harmonisierung der Datenübertragung im Bussystem sowie der Protokolle, der Inhalte und der Funktionalitäten des Subsystems möglich.

## Beschreibung

Die Erfindung betrifft ein Kommunikationsnetzwerk mit mehreren Subsystemen.

Eine komplexe technische Anlage besteht aus einer Vielzahl verschiedener Komponenten, die miteinander verschaltet sind. Dabei werden die einzelnen Komponenten von unterschiedlichen Firmen hergestellt und erst von einem Anlagenbauer miteinander verbunden. Der Zulieferer einer Komponente ist dabei nur für die Funktionsfähigkeit seiner Komponente verantwortlich. Der Anlagenbauer hat dafür Sorge zu tragen, dass an Schnittstellen die einzelnen Komponenten zuverlässig kommunizieren können.

Bisher war es üblich, dass der Anlagenbauer um die spätere Funktionsfähigkeit der Gesamtanlage zu gewährleisten, mit allen Zulieferern von Komponenten bilaterale Vereinbarungen über Aufbau und Funktionsweise der Komponenten treffen musste.

Ein solches Regelwerk ist aufwendig. Darüber hinaus war es bisher nicht möglich, z.B. bei einer Nachrüstung, eine Komponente eines neuen Komponentenherstellers einzusetzen. Manche Einsparungen und Verbesserungen an der Anlage wären folglich nicht möglich.

Der Erfindung liegt die Aufgabe zugrunde, ein Kommunikationsnetzwerk mit mehreren Subsystemen anzugeben, bei dem mit geringem Aufwand verschiedenartige Subsysteme verwendet werden können. Es soll eine große Kompatibilität der Subsysteme untereinander möglich sein, um die vorhandenen Potentiale für Einsparungen und Verbesserungen in der Anlagenentwicklung vollständig ausschöpfen zu können.

Die Aufgabe wird gemäß der Erfindung dadurch gelöst, dass jedes Subsystem mit einem Adapter verbunden ist, der mit einem Bussystem in Verbindung steht und Daten des Subsystems an ein standardisiertes Datenschema anpasst.

Die Daten des Subsystems sind somit in das übergeordnete Datenschema übersetzt. Sie können von übergeordneten Systemen zuverlässig verstanden, zugeordnet und verarbeitet werden.

Damit wird der Vorteil erzielt, dass die Subsysteme selbst nicht auf die vorgesehene Verwendung abgestimmt werden müssen. Es entfallen aufwendige Arbeitsschritte bei den Herstellern der Subsysteme. Das hat zur Folge, dass in einfacher Weise ein anderer Zulieferer für ein bestimmtes Subsystem gewählt werden kann. Der Anlagenbauer ist nicht mehr stark an die Zulieferer der Subsysteme gebunden. Die Anlage kann dadurch wirtschaftlicher als bisher erstellt werden. Insbesondere bei einer Instandsetzung kann in einfacher Weise ein vielleicht nicht mehr zur Verfügung stehender Zulieferer durch einen anderen ersetzt werden.

Der notwendige Adapter wird vom Anlagenbauer erstellt und so konzipiert, dass er mit einem beliebigen Subsystem einfach verbunden werden kann.

Vorteilhafte Weiterbildungen des Kommunikationsnetzwerks nach der Erfindung sind den Unteransprüchen zu entnehmen.

Beispielsweise ist das Bussystem, über das die Adapter mit der Auswerteeinheit verbunden sind, ein standardisiertes Informationsnetzwerk, das die Übertragung standardisierter Protokolle erlaubt. Das geschieht auf der Basis bewährter Mechanismen und Protokolle (http, ftp, SOAP). Ein geeignetes Bussystem ist ein IT-BUS. Dadurch ist eine besonders zuverlässige Weiterleitung von Daten möglich.

Beispielsweise bildet ein Subsystem zusammen mit dem ihm zugeordneten Adapter eine sogenannte Systemkomponente. Es bildet dadurch eine standardisierte Kommunikationsspezifikation. Damit ist gemeint, dass der Adapter als Baustein (Hardware, Einschub) aufgebaut sein kann, der mit dem Subsystem verbunden ist. Der Adapter ist dazu beispielsweise so aufgebaut, dass er in sehr einfacher Weise mit dem Subsystem zu verbinden ist (Signale, direkte Verbindung). Der Adapter kann beispielsweise vom Anlagenbauer eingebaut werden oder er wird vom Anlagenbauer dem Hersteller des Subsystems zur Verfügung gestellt, damit dieser den Einbau vornimmt.

Nach einem anderen Beispiel ist der Adapter als Programmcode in die Software des Subsystems integriert. Diesen Programmcode liefert in der Regel der Anlagenbauer an den Zulieferer, der das Subsystem baut. Mit einer solche Lösung wird der besondere Vorteil erzielt, dass zahlreiche Subsysteme schnell und zuverlässig zu adaptieren sind.

Der Adapter kann beispielsweise durch Herunterladen einer Datei projektierbar sein. Dabei kann der Adapter insbesondere die Daten der Datei selbst erkennen und ablegen.

Der Adapter kann beispielsweise als Programmcode auf einer eigenständigen Hardware (Baustein) einsetzbar sein. Bei dieser Variante ist zwar ein Baustein in das Subsystem zu integrieren, dieser Baustein ist aber, wenn er z.B. ein Speicherchip ist, leicht zu installieren. Die Hardware kann auch ein Einschub oder eine Anschaltbaugruppe sein, die leicht zu montieren sind

Beispielsweise sind durch den Adapter selbst die Verbindungen zum Subsystem und zum übergeordneten Netzwerk diagnostizierbar und in standardisierbarer Form darstellbar. Durch eine solche Ausgestaltung des Adapters wird der Vorteil erzielt, dass ein Fehler in einer Verbindung schnell und zuverlässig zu erkennen ist.

Beispielsweise enthält der Adapter Interfaces für den bidirektionalen Datentransfer, z.B. in Richtung Subsystem und in Richtung Netzwerk. Damit ist es möglich, über den Adapter Datenströme vom Subsystem zum Netzwerk und umgekehrt zu gewährleisten und auch zu lenken.

Das Subsystem muss zur Kommunikation mit dem Adapter eingerichtet sein. Dadurch sind das Subsystem betreffende Daten leicht übertragbar.

Für die Beschreibung des Adapters ist beispielsweise ein einheitliches Sprachmittel vorhanden. Mit diesem Sprachmittel werden die Parameter des Adapters beschrieben, so dass der Adapter in vielfältigen Varianten einsetzbar ist. Die Beschreibung des Adapters kann Struktur, Schnittstellen, Funktionen und Werkzeuge umfassen. Es kann ein einziges Werkzeug für die Projektierung verwendet werden.

Der Adapter erfüllt beispielsweise die Funktion eines Zwischenspeichers für Daten des Subsystems, z.B. eines Datenservers. Dadurch ist es möglich, im Adapter Daten zu speichern und zu verwalten, die für die Funktion der Anlage wichtig sind und auf die zurückgegriffen werden soll.

Zum Beziehen nicht vorhandener Daten kann der Adapter mit anderen Adaptern in Verbindung stehen. Hierzu ist im Adapter eine Referenz auf andere Adapter abgelegt. Es entsteht vorteilhaft ein hierarchisches Netzwerk.

Insbesondere kann der Adapter so aufgebaut sein, dass er den zuletzt von Subsystemen erhaltenen Wert speichert oder mit Kennzeichen archiviert. Dabei kann der alte Wert überschrieben oder mit Kennzeichen versehen archiviert werden. Es können auch Inhalte ergänzt werden.

Durch diese Weiterentwicklungen wird die Funktion des Adapters als Datenspeicher weiter verbessert.

Mit dem Kommunikationsnetzwerk nach der Erfindung wird insbesondere der Vorteil erzielt, dass verschiedenartige Subsysteme, die von verschiedenen Herstellern gefertigt wurden, mit einfachen Mitteln und zuverlässig zu einer Gesamtanlage zu verschalten sind. Das geschieht vorteilhafterweise durch die Einfügung von Adaptern, die der Anlagenbauer zur Verfügung stellt. Der Anlagenbauer ist nicht länger auf bestimmte Zulieferer für Subsysteme festgelegt. Die gewünschte Standardisierung erfolgt im Subsystem in einheitlicher Weise und betrifft unter anderem Inhalte, Protokolle und Funktionalitäten.

## Patentansprüche

1. Kommunikationsnetzwerk mit mehreren Subsystemen,
**dadurch gekennzeichnet, dass** jedes Subsystem mit einem Adapter verbunden ist, der mit einem Bussystem in Verbindung steht und Daten des Subsystems an ein standardisiertes Datenschema anpasst.

2. Kommunikationsnetzwerk nach Anspruch 1,
**dadurch gekennzeichnet, dass** das Bussystem ein standardisiertes Informationsnetzwerk ist, das die Übertragung standardisierter Protokolle erlaubt.

3. Kommunikationsnetzwerk nach einem der Ansprüche 1 oder 2,
**dadurch gekennzeichnet, dass** ein Subsystem zusammen mit dem ihm zugeordneten Adapter eine Systemkomponente bildet.

4. Kommunikationsnetzwerk nach Anspruch 3,
**dadurch gekennzeichnet, dass** der Adapter als Programmcode in die Software des Subsystems integriert ist.

5. Kommunikationsnetzwerk nach Anspruch 4,
**dadurch gekennzeichnet, dass** der Adapter durch Herunterladen einer Datei projektierbar ist.

6. Kommunikationsnetzwerk nach Anspruch 3,
**dadurch gekennzeichnet, dass** der Adapter als Programmcode auf einer eigenständigen Hardware einsetzbar ist.

7. Kommunikationsnetzwerk nach einem der Ansprüche 1 bis 6,
**dadurch gekennzeichnet, dass** durch den Adapter selbst die Verbindungen zum Subsystem und zum übergeordneten Netzwerk diagnostizierbar und in standardisierter Form darstellbar sind.

8. Kommunikationsnetzwerk nach einem der Ansprüche 1 bis 7,
**dadurch gekennzeichnet, dass** der Adapter Interfaces für den bidirektionalen Datentransfer enthält.

9. Kommunikationsnetzwerk nach einem der Ansprüche 1 bis 8,
**dadurch gekennzeichnet, dass** für die Beschreibung des Adapters ein einheitliches Sprachmittel vorhanden ist.

10. Kommunikationsnetzwerk nach einem der Ansprüche 1 bis 9,
**dadurch gekennzeichnet, dass** der Adapter die Funktion eines Zwischenspeichers für Daten des Subsystems erfüllt.

11. Kommunikationsnetzwerk nach einem der Ansprüche 1 bis 10,
**dadurch gekennzeichnet, dass** der Adapter zum Beziehen nicht vorhandener Daten mit anderen Adaptern in Verbindung steht.

12. Kommunikationsnetzwerk nach einem der Ansprüche 1 bis 11,
**dadurch gekennzeichnet, dass** der Adapter den zuletzt vom Subsystem erhaltenen Wert speichert oder mit Kennzeichen archiviert.
